# EUROPEAN PATENT SPECIFICATION

(11) **EP 3 755 964 B1**
(45) Date of publication and mention of the grant of the patent: **14.08.2024**
(21) Application number: 18907249.9
(22) Date of filing: 20.02.2018
(51) Int. Cl.: B64G 1/00, B64G 5/00, F41B 3/04, F41F 7/00, B64F 1/04, B64G 99/00

(54) **CIRCULAR MASS ACCELERATOR**
KREISFÖRMIGER MASSENBESCHLEUNIGER
ACCÉLÉRATEUR DE MASSE CIRCULAIRE

(43) Date of publication of application: 30.12.2020
(73) Proprietor: SpinLaunch Inc., Long Beach, CA 90808 (US)
(72) Inventor: YANEY, Jonathan, Long Beach, CA 90808 (US)
(74) Representative: Knöner, Gregor
(86) International application number: PCT/US2018/018725
(87) International publication number: WO 2019/164472

(56) References cited:
- WO-A1-2014/124431
- WO-A1-2015/167384
- WO-A1-2015/167384
- CN-A- 1 566 895
- CN-A- 105 115 358
- FR-A- 1 235 075
- US-A- 3 989 206
- US-A- 4 463 745
- US-A- 4 632 086
- US-A- 4 709 883
- US-A- 5 857 451
- US-A1- 2004 221 838
- US-A1- 2009 301 454
- US-A1- 2014 306 065
- US-A1- 2015 241 158
- US-A1- 2017 346 378
- US-B1- 6 311 926
- US-B1- 6 712 055

## Description

### FIELD OF THE INVENTION

The present disclosure relates generally to the field of mass acceleration systems, and more specifically to systems and methods for launching a projectile using centrifugal acceleration.

### BACKGROUND ART

The document WO2015/167384A1 relates to a method and a device for launching warheads at high velocity. The device includes a flywheel, the rim of which is provided with chambers for loading warheads. The flywheel can launch the warheads through the chambers during its rotation process.

The document US3989206A relates to a method and apparatus for launching a remotely piloted aircraft. The aircraft is attached to one end of a rotatable arm and revolved about a fixed pivot point until a predetermined speed is reached whereupon the vehicle is released. At the same time, a counter weight attached to the opposite end of the arm is released from the arm.

The document FR1235075A relates to an apparatus for launching projectiles, in particular bullets, employing as a propulsive force the centrifugal force generated in a launching element rotating at a very high speed.

The document US2014/306065A1 relates to a launch system, a launch vehicle and methods of launching a payload by means of the launch vehicle and/or the launch system. The launch vehicle can be utilized with the launch system which may comprise a launch tube.

### SUMMARY

The invention is defined in the independent claims. Particular embodiments are set out in the dependent claims.

This summary is provided to introduce a selection of concepts in a simplified form that are further described in the Detailed Description below. This summary is not intended to identify key features or essential features of the claimed subject matter, nor is it intended to be used as an aid in determining the scope of the claimed subject matter.

Various embodiments of the present disclosure may be directed to an acceleration system for launching a projectile. An exemplary system may comprise a chamber at vacuum pressure, and a tether having a first end portion, a central portion, and a second end portion. The first end portion may be coupled to a projectile. A motor may rotate a hub coupled to the tether in a circular motion inside the chamber, the rotating causing the projectile to accelerate until it reaches a desired launch speed. A release mechanism may release the projectile from the tether once it reaches the launch speed. An exit port may allow the projectile to exit from the chamber upon release from the tether.

According to additional exemplary embodiments, the present disclosure may be directed to an acceleration system for launching a projectile. An exemplary system may comprise a chamber at vacuum pressure. The chamber may comprise an inverted dome-shaped roof structure comprising a plurality of roof panels under tension. A tether may comprise a first end coupled to a projectile in proximity to an edge of the chamber and a second end coupled to a motor at a center of the chamber. The motor may cause the tether and the projectile to rotate in a circular motion until the projectile reaches a desired launch speed. A release mechanism may release the projectile from the tether once it reaches the launch speed. An exit port may allow the projectile to exit from the chamber upon release from the tether.

According to still further exemplary embodiments, the present disclosure may be directed to a method for launching a projectile. An exemplary method may comprise coupling a projectile to a tether within a vacuum chamber. At least a portion of air within the chamber may be removed to create a vacuum condition within the chamber. The tether and the coupled projectile may be rotated in a circular motion until a speed of the projectile reaches a desired launch speed. The projectile may be released from the tether, and then launched from the chamber out an exit port.

### BRIEF DESCRIPTION OF THE DRAWINGS

Embodiments are illustrated by way of example and not by limitation in the figures of the accompanying drawings, in which like references indicate similar elements.
FIG. 1 is a partial cutaway view of a circular mass accelerator structure according to various embodiments.
FIG. 2 is a perspective view of a circular mass accelerator structure according to various embodiments.
FIG. 3A is a front cross-sectional view of a circular mass accelerator structure according to various embodiments.
FIG. 3B is a perspective view of a circular mass accelerator structure at an angle, according to various embodiments.
FIG. 4 is a schematic view of a tether according to various embodiments.
FIG. 5A is a perspective cutaway view of a circular mass accelerator showing a launch event according to various embodiments.
FIG. 5B is a perspective cutaway view of a circular mass accelerator showing a launch event according to various embodiments.
FIG. 5C is a perspective cutaway view of a circular mass accelerator showing a launch event according to various embodiments.
FIG. 6 is a graph showing the relationship between acceleration and chamber diameter as a function of launch velocity according to various embodiments.
FIG. 7A is a graph of baseline booster phase flight profile showing altitude as a function of time according to various embodiments.
FIG. 7B is a graph of baseline booster phase flight profile showing velocity as a function of time according to various embodiments.
FIG. 7C is a graph of baseline booster phase flight profile showing Mach number as a function of time according to various embodiments.
FIG. 7D is a graph of baseline booster phase flight profile showing flight angle as a function of time according to various embodiments.
FIG. 8 is a schematic diagram of various trajectories for projectile launch velocities according to various embodiments.
FIG. 9 is a flow diagram of an exemplary method for launching a projectile according to various embodiments.

### DETAILED DESCRIPTION

In the present application the following conversion units is to be applied: 1 Torr = 133 Pa; 1 psi = 6895 Pa. The following detailed description includes references to the accompanying drawings, which form a part of the detailed description. The drawings show illustrations in accordance with example embodiments. These example embodiments, which are also referred to herein as "examples," are described in enough detail to enable those skilled in the art to practice the present subject matter. The embodiments can be combined, other embodiments can be utilized, or structural, logical, and other changes can be made without departure from the scope of what is claimed. 44e

A mass accelerator can be used for many applications, such as launching projectiles downrange or for launching a payload into space. Delivering a projectile downrange requires sufficient energy to provide sufficient velocity for the projectile under given launch parameters (e.g., mass of the projectile, launch angle) to accurately reach a downrange position. In mass acceleration for space applications, one fundamental problem of rocket-propelled launch vehicles is to generate sufficient energy and velocity to place the payload into orbit. Traditional rockets carry massive quantities of propellant to deliver payloads that are minute fractions of the overall vehicle sizes and weights. All the performance and risks are built into a precision, often single-use vehicle that must be highly reliable and inherently costly.

While incremental gains have been made in rocket technologies to reduce space launch costs, alternative approaches are necessary to reduce those costs and increase launch rates by the orders of magnitude necessary to create exponential growth in the space transportation industry. Since the beginning of the space program, ground-based non-rocket launch systems such as rail guns and ram accelerators have been proposed to achieve this; however, all have employed unproven technologies with cost prohibitive initial capital investment. In contrast, the present disclosure comprises an innovative acceleration system which may achieve very high launch speeds without the need for enormous power generation or massive infrastructure. In various embodiments, an electric or combustion-driven motor or turbine may spin a tether and launch vehicle (which may be a projectile or a payload) inside a vacuum chamber until the launch vehicle reaches a desired launch speed. The launch vehicle may then be then released through a tangential exit port into its launch trajectory. In various embodiments comprising a space launch, the acceleration system may launch the launch vehicle such that it ascends above the appreciable atmosphere, after which an onboard rocket may provide the final required velocity for orbital insertion. Because the majority of the energy required to reach orbit may be sourced from ground-based electricity as opposed to complex rocket propulsion, total launch cost may be reduced by at least an order of magnitude over existing launch systems.

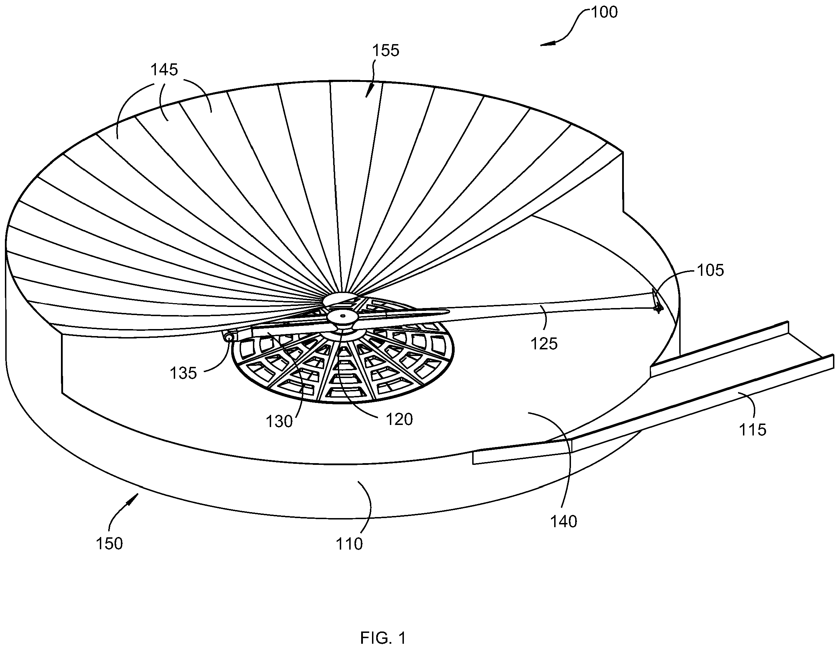

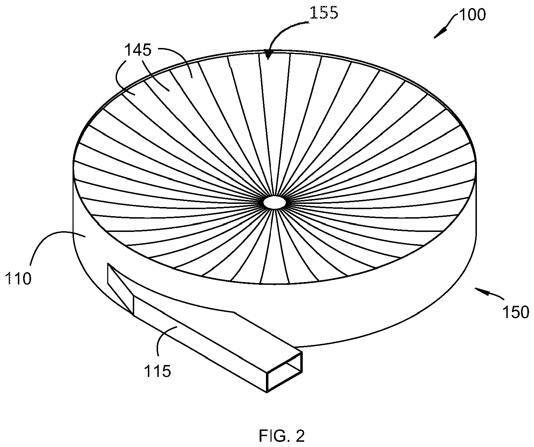

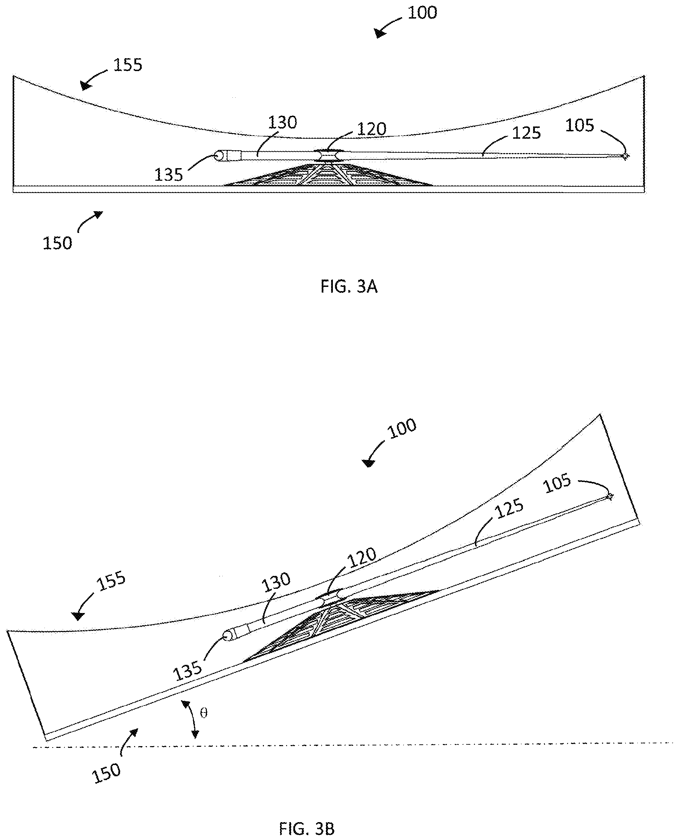

FIG. 1 illustrates a partial cutaway view of the launch system 100 according to various embodiments. The launch system 100 may comprise a circular mass accelerator structure 150 comprising a floor 140 and side walls 110. In certain embodiments, a diameter of the circular mass accelerator structure 150 may be approximately 100 meters, although one skilled in the art will readily recognize that the diameter may be more or less than 100 meters depending on particular applications. The floor 140 and side walls 110 may be constructed of any suitable structural material such as concrete, steel, composite, and the like. As further illustrated in FIG. 2, a roof structure 155 may span the distance across the side wall 110. In some embodiments, the roof structure 155 may comprise a plurality of thin wall mild steel wedge-shaped panels 145 coupled together to form a concave dome shape. As illustrated in the cross-sectional view of FIG. 3A according to various embodiments, the entirety of the concave dome roof structure 155 may span the circular mass accelerator structure 150 without interior structural support. The roof structure 155 may be supported by a circumferential compression ring. In this configuration, the roof structure 155 may be in a tensile state at operating vacuum pressures that avoids the potential of buckling that may be encountered with alternative types of freestanding structures.

The circular mass accelerator structure 150 may comprise a sealed chamber that can be placed under at least partial vacuum by evacuating at least a portion of the air within the circular mass accelerator structure 150. In certain embodiments, the pressure within the circular mass accelerator structure 150 may be reduced to about 10⁻² torr, although a pressure of less than about 10⁻¹ torr may be acceptable depending on particular applications. At pressures less than about 10⁻² torr, outgassing complications may begin to occur from the roof 155 and walls if constructed from mild steel, such as A-36. If pressures substantially less than about 10⁻² are desired, then the roof 155 and walls may be coated or constructed of different materials suitable to those pressures.

A concern in vacuum chamber designs is typically the level or quality of vacuum desired. In the present disclosure, air is evacuated from the circular mass accelerator structure 150 only for the purpose of minimizing drag and aerodynamic heating, so a high level vacuum as is ordinarily called for in common vacuum chamber designs may not be necessary. The maximum external pressure imposed on the circular mass accelerator structure 150 is about 14.7 psi which is well within the strength capability of standard mild steel plate.

FIGS. 1 and 2 illustrate a circular mass accelerator structure 150. A circular shape has been selected for certain embodiments because of the even distribution of load forces throughout the structure due to the mass of the roof structure and atmospheric forces on the roof 155 when the circular mass accelerator structure 150 is under vacuum. However, one skilled in the art will recognize that the circular mass accelerator structure 150 could instead be any non-circular shape desired, such as oval or rectangular. However, deviations from a circular design may impose design constraints that could drive up overall costs.

FIGS. 1 and 3A also illustrate a generally flat floor 140 of the circular mass accelerator structure 150. In certain embodiments to reduce costs, the floor 140 may be constructed in a similar fashion to the roof 155 using a dome-shaped tension structure. In those embodiments in which the domed floor 140 is not inverted (i.e., convex opposite to the concave roof 155), the two dome shapes of the roof 155 and the floor 140 may reduce the interior volume of the circular mass accelerator structure 150, thereby reducing the amount of air to be pumped out to achieve the desired level of vacuum.

Although not visible in FIG. 1 or 3A, the circular mass accelerator structure 150 may house an electrically-driven or combustion-driven motor. A rotating shaft coupled to the motor may extend upwards, and a hub 120 may be coupled to a terminal end of the shaft. A launch vehicle tether 125 is coupled to the hub 120 at one end and to the launch vehicle 105 at an opposite end. A counterweight tether 130 is coupled at one end to the hub 120 directly opposite the launch vehicle tether 125 and to a counterweight 135 at an opposite end. While the launch vehicle tether 125 and counterweight tether 130 are described in some embodiments separately, they can actually be portions of a singular tether coupled to the hub 120.

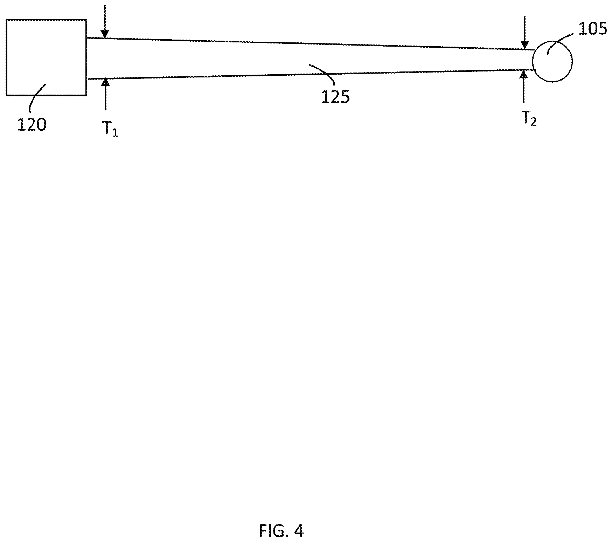

The launch vehicle tether 125 may be subjected to high tensile loads during operation. For a baseline launch vehicle 105 of 2000 kg accelerated to 3,000 m/s, and spinning at 535 RPM, the load on the tether will be 3.14×10⁸ N. Materials advancements during the last two decades in ultra-high tensile strength materials such as PBO, UHMPE, aramid, Kevlar, carbon fiber, carbon nanotubes, and combinations thereof, have enabled launch vehicle tether 125 construction at reasonable cost. At 535 RPM, the tip of the launch vehicle tether 125 is travelling at 2,800 m/s and is in tension with 16,000 g of radial acceleration (assuming a launch vehicle tether 125 length of 50 m). The launch vehicle tether 125 may be aerodynamically shaped to minimize drag and aerodynamic heating at supersonic speeds. In addition, as illustrated in FIG. 4, the launch vehicle tether 125 may have a larger cross-sectional thickness T₁ at the end coupled to the hub 120 than a cross-sectional thickness T₂ at the end coupled to the launch vehicle 105. The ratio of T₁:T₂ may be derived by a formula to minimize the mass of the launch vehicle tether 125 while maximizing tensile strength.

Because of the highly optimized launch vehicle tether 125 design, minimal electrical harnessing is routed through the launch vehicle tether 125 to the launch vehicle 105 for power. Just prior to chamber pump down, all hardline connections for power and command and telemetry may be disconnected, and the launch vehicle 105 and its payload may switch to internal power. Henceforth, command and telemetry for the launch vehicle 105 and its payload may be transmitted via RF airlink or other suitable communications technology.

The launch vehicle 105 may have a low-angle conical shape, designed for hypersonic speeds and contain, for example, a payload, fairing/sabot, avionics, thermal protection, and aerodynamic stabilization systems. The launch vehicle 105 may further comprise stabilizing fins at an aft end. The circular mass accelerator structure 150 may be evacuated to a low pressure environment as described above to reduce drag and aerodynamic heat load on the launch vehicle 105 and tether. Once accelerated to the desired launch speed, the launch vehicle 105 may be released into the ambient environment through a fast-actuating exit port 115, and the launch vehicle 105 may ascend on a ballistic trajectory to its desired altitude. If so equipped, the launch vehicle's 105 onboard rocket propulsion system may provide the final energy necessary to achieve a desired orbital altitude and inclination. As opposed to current microsatellite launch vehicles which have 3 or 4 stages totaling 70 to 100 ft. in length, various embodiments of the launch vehicle 105 of the present disclosure for a similar payload may have only one stage and may be about 15 ft. in length.

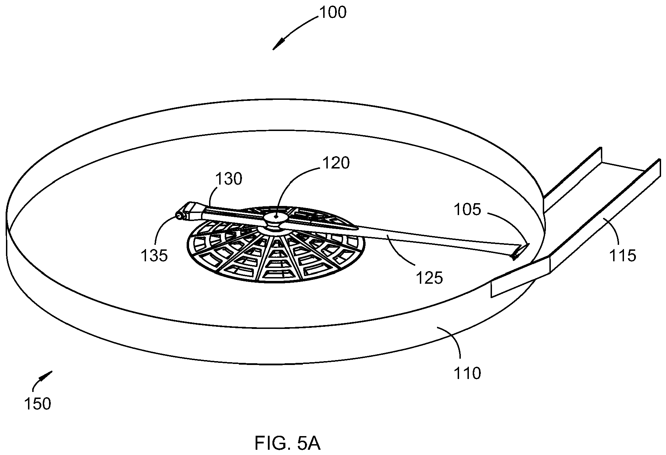

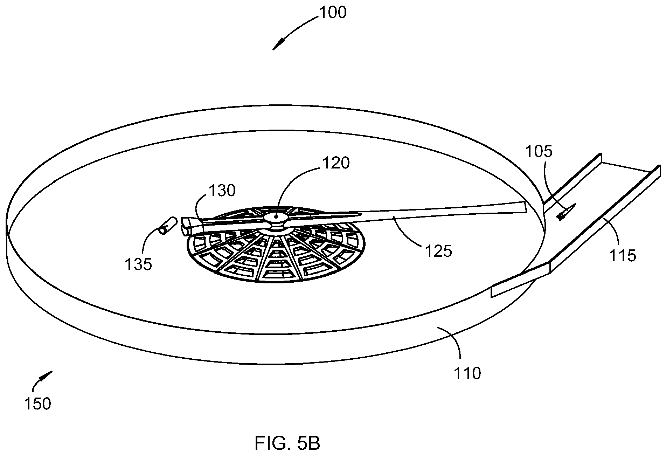

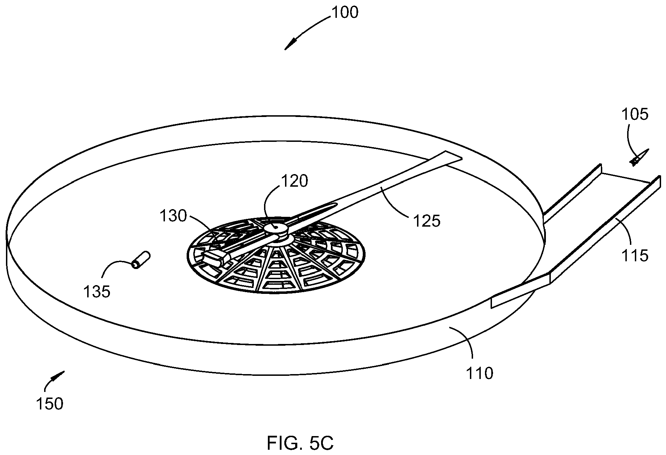

A sequence of events for launching the launch vehicle 105 from the circular mass accelerator structure 150 according to various embodiments is illustrated in FIGS. 5A through 5C (the roof 155 is not shown in FIGS. 5A through 5C in order to more clearly illustrate interior components of the launch system 100). Once a desired velocity is attained (measured, for example, either as a velocity of the launch vehicle 105 or RPM of the launch vehicle tether 125), the launch vehicle 105 may be released from the launch vehicle tether 125 at a point where a tangential vector of the path of the tether 125 aligns with the exit port 115 as illustrated in FIG. 5A. Simultaneously, the counterweight 135 may be released from the counterweight tether 130. In FIG 5B, the launch vehicle 105 continues along the tangential vector and enters the exit port 115. The launch vehicle tether 125 and the counterweight tether 130 continue to rotate, and the counterweight 135 moves away from the counterweight tether 130. The launch vehicle 105 leaves the exit port 115 in FIG. 5C, completing the launch sequence. The counterweight continues to move outward toward the side wall 110.

Though it operates at even higher speeds, the launch vehicle 105 may draw on the pool of projectile shapes whose aerodynamics and stability characteristics have been extensively researched in supersonic and hypersonic test facilities. A variety of approaches may be employed to address thermal environments, ranging from ceramic heat shields on the Space Shuttle and ablative carbon phenolics on Galileo to heat sink tungsten nose caps on the X43 Mach 10 Scramjet vehicle and hypersonic projectile artillery shells to active cooling such German DLR Sharp Edged Flight Experiment (SHEFEX) suborbital rocket transpiration cooling experiments.

The exit port 115 may comprise any system or structure that can provide adequate sealing when the circular mass accelerator structure 150 is under vacuum and that can be opened at a high rate of speed, or alternatively pierced by the launch vehicle 105. In various embodiments, the exit port 115 may comprise a fast-actuating door or shutter. In other embodiments, the exit port 115 may comprise one or more sheets of a polymeric material such as Mylar which may be pierced by the launch vehicle 105 upon launch.

Although not shown in the previous figures, the circular mass accelerator structure 150 may comprise a second exit port directly opposite the exit port 115 to capture the counterweight 135 that is released simultaneously with the launch vehicle 105 to minimize an imbalance on the motor at the time of release. The counterweight 135 may be a solid material, or a liquid such as water.

The launch system 100 described above may be a fixed-base system designed according to various embodiments to launch a payload of about 40 kg to 150 km altitude circular orbit, or to deliver the payload downrange. In addition to performance targets, the launch system 100 may typically be designed with a radial acceleration of 10,000 - 25,000 g although launch systems may be designed with radial accelerations greater than or less than this range in other embodiments. In exemplary embodiments, the radial acceleration is 15,000 - 20,000 g. Overall system operating parameters according to exemplary embodiments are enumerated in Table 1.

**Table 1. Exemplary Launch System Operating Parameters**

| | |
|---|---|
| Parameter | Value |
| Vehicle Mass | 2,000 kg |
| Payload Mass | 43 kg |
| Launch Velocity | 2,800 m/s M=8.2 (Sea Level) |
| | |
| Orbital Altitude | 350 km |
| Circular Mass | 100 m Diameter |
| Accelerator Size | |
| Rotational Speed | 535 RPM |

.

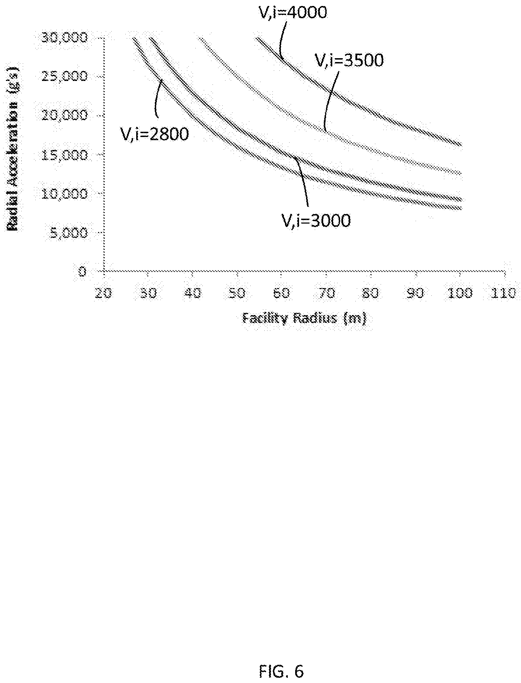

The rotational speed, and eventual launch velocity V, of the launch vehicle 105 may be set by the motor. The maximum designed radial acceleration may determine the length of the launch vehicle tether 125, and consequently the interior diameter of the circular mass accelerator structure 150. FIG. 6 illustrates the interrelationship between the acceleration and circular mass accelerator chamber 150 diameter as a function of launch velocity. For example, given the exemplary launch system operating parameters in Table 1 and consulting the graph of FIG. 6, if a maximum radial acceleration of 16,000 g is desired at a launch velocity of 2,800 m/s then FIG. 6 indicates that a facility radius of approximately 50 m (100 m diameter) would be required.

A typical sequence of launch events for exemplary embodiments involving orbital insertion is presented in Table 2.

**Table 2. Sequence of Events for Exemplary Launch**

| | |
|---|---|
| Event | Time |
| Pump Down of Circular | L0-60 min |
| Mass Accelerator Structure | |
| Spinup of Motor | L0-30 min |
| Release Launch Vehicle | L0-3 msec |
| Launch | L0 |
| Fairing/Sabot Separation | L0+45 sec |
| First Burn Start L1, | L0+60 sec |
| First Burn Complete | L1+128.1 sec |
| Second Burn Start | L2 |
| Target Orbital Insertion | L2+11.3 sec |

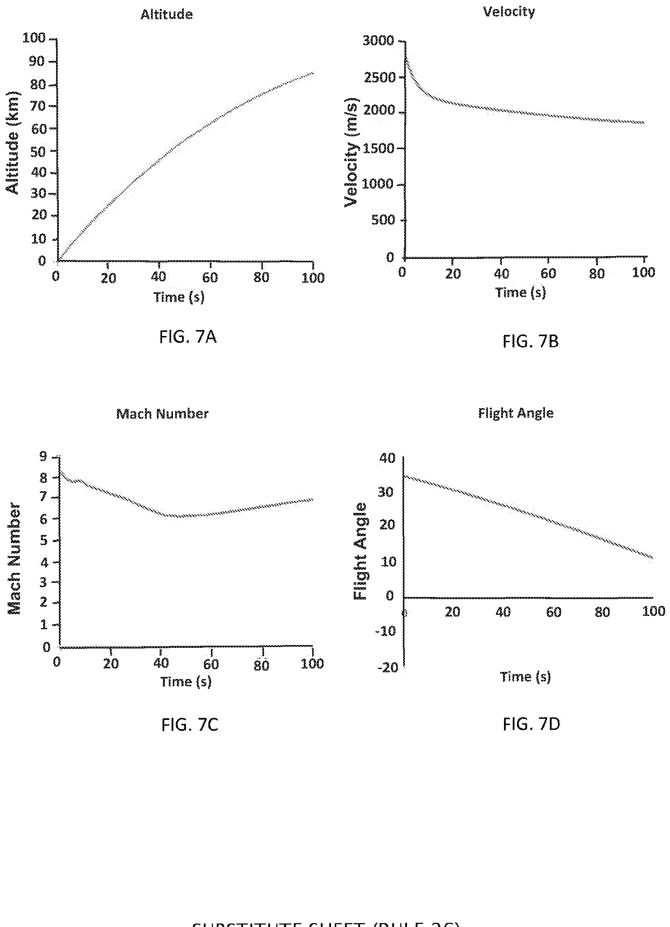

As would be understood by a person of ordinary skill in the art, the flight profile may be divided into two phases: booster phase and upper stage phase. The booster phase shown in FIGS. 7A through 7D may be representative of ballistic launch with drag according to various embodiments. FIG. 7A illustrates that the altitude is an exponential function wherein the rate of increase in altitude decreases with time. The velocity may decrease sharply for the first 5-10 seconds after launch as illustrated in FIG. 7B as aerodynamic drag is imposed on the launch vehicle 105 as it leaves the circulator accelerator structure 150 and encounters non-vacuum conditions. Once the boosters ignite, the rate of deceleration decreases markedly to a gradual, near linear decline as the desired orbital insertion velocity is reached. FIG. 7C illustrates that the launch vehicle starts out well into the hypersonic realm and the Mach number decreases until an altitude of 40 km is reached (see also FIG. 7A), at which point the Mach number gradually increases. The flight angle as illustrates in FIG. 7D steadily decreases as the curved flight path of the launch vehicle 105 flattens out as the launch vehicle 105 approaches orbital insertion. The mission design may be further refined to match the initial conditions for the upper stage first burn, L1, and optimized for upper stage performance to tailor the upper stage flight profile to meet a target orbit.

Mission design for the launch system 100 may also comprise a booster and an upper stage phase, similar to the upper stage of any other launch vehicle. In this case, the booster phase is defined by the launch vehicle 105 flight conditions at the exit of the circular mass accelerator structure 150. The horizontal contribution of launch velocity V converts directly to orbital velocity at lower launch angles θ, but at the cost of greater aerodynamic drag. Trajectory optimizations illustrate an interrelationship between payload mass, launch angle θ (e.g., angle from horizontal), target orbit and launch velocity V. In addition to the higher drag, a higher corresponding total heating may occur which may require additional cooling or launch vehicle 105 mass to accommodate thermal management. The upper stage phase may be tailored to desired requirements in the same way as traditional rocket missions. An exemplary structure at a launch angle θ is depicted in FIG. 3B.

Other contributors to performance are launch altitude and launch site latitude/azimuth. Similar to traditional rocket aerodynamics, altitude dictates the prevailing Mach regime of flight which in turn determines drag coefficient. Higher altitudes generally reduce drag coefficient and a corresponding reduction in the increase in velocity required from an upper stage. The same factors contribute to lower heating rates. The launch system 100 may also benefit from higher altitudes since the circular mass accelerator structure 150 may be evacuated to vacuum more readily. This may reduce power consumption requirements as well as drag and aerodynamic heating during spin up.

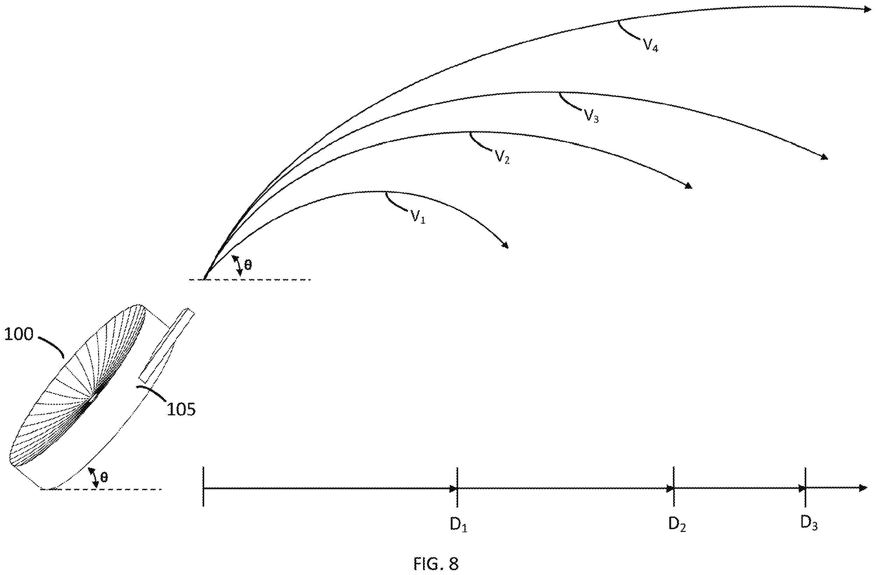

FIG. 8 illustrates a schematic diagram of a trajectory for a launch vehicle 105 according to various embodiments. Within the launch system 100, the launch vehicle 105 may be rotated at a high speed under vacuum conditions until a desired launch velocity V is obtained. The launch vehicle 105 may then be released and exit the launch system 100 at a pre-determined launch angle θ (relative to horizontal). FIG. 8 illustrates that the launch vehicle 105 may achieve different downrange distances D by varying the launch velocity V, all other factors such as the mass and shape of the launch vehicle 105 and launch angle θ remaining constant. For example, at a launch velocity of V₁ a downrange distance Di may be achieved. Increasing the launch velocity to V₂ may result in a downrange distance of D₂, and further increasing the launch velocity to V₃ may result in a downrange distance of D₃. Increasing the launch velocity allows for a smaller onboard rocket to be required to launch the launch object out of the appreciable atmosphere and achieve orbital insertion. Although not illustrated in FIG. 8, downrange distances D₁, D₂, and Ds as well as orbital insertion may be achieved by keeping the launch velocity V constant and varying the launch angle θ.

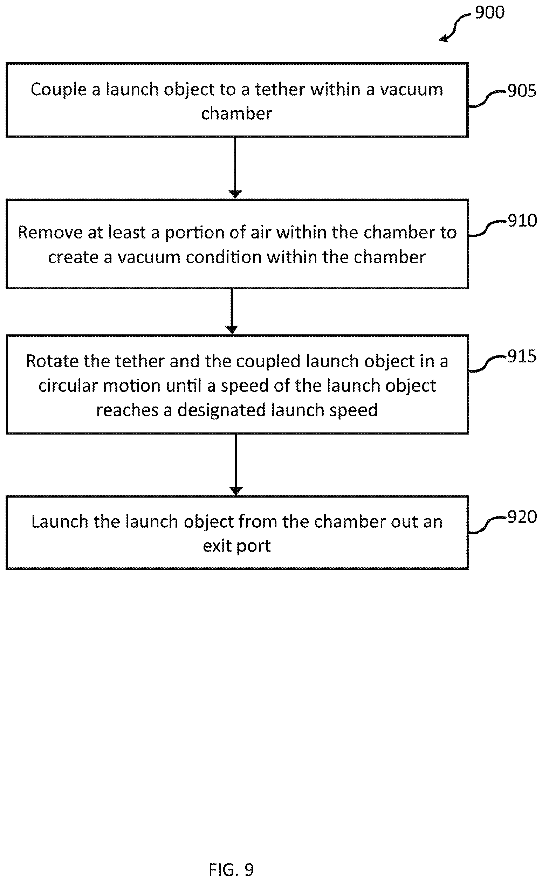

FIG. 9 is a flowchart of an exemplary method 900 for launching a projectile, also sometimes referred to herein as launch vehicle. At step 905, a projectile 105 may be coupled to a tether 125 within a vacuum chamber 150. At least a portion of air within the chamber 150 may be removed at step 910 to create a near vacuum condition within the chamber 150. At step 915, the tether 125 and the coupled projectile 105 may be rotated in a circular motion until a speed of the projectile 105 reaches a desired launch speed. The projectile 105 may be released from the tether 125 at step 920, and the projectile 105 may be launched from the chamber 150 out an exit port 115.

Various embodiments of the launch system 100 may be used in any application in which a projectile or payload is desired to be launched to a downrange position or launched into Earth orbit or beyond. Such a mass acceleration system can be used in many applications across a variety of industries. In a space launch application, the launch system 100 may be used to deliver payloads such as satellites into Earth orbit, or to deliver space vehicles beyond Earth orbit. The launch system 100 may also be used in any application where a large amount of force is applied to a concentrated area. One such example is surface mining operations where the launch system 100 could essentially be used as a cannon to deliver an object into a hillside to break up the rock. One skilled in the art will readily recognize that the launch system 100 may be applied in any situation where a projectile can achieve a desired function.

While the present disclosure has been described in connection with a series of preferred embodiments, these descriptions are not intended to limit the scope of the disclosure to the particular forms set forth herein. The above description is illustrative and not restrictive. Many variations of the embodiments will become apparent to those of skill in the art upon review of this disclosure. The scope of this disclosure should, therefore, be determined not with reference to the above description, but instead should be determined with reference to the appended claims.

As used herein, the terms "having", "containing", "including", "comprising", and the like are open ended terms that indicate the presence of stated elements or features, but do not preclude additional elements or features. The articles "a", "an" and "the" are intended to include the plural as well as the singular, unless the context clearly indicates otherwise.

## Claims

1. An acceleration system for launching a projectile (105), the system comprising:
a chamber at vacuum pressure;
a tether having a first end portion (125), central portion, and second end portion (130), the first end portion connected to a projectile (105);
a motor that rotates a hub (120) attached to the tether in a circular motion inside the chamber, the rotating causing the projectile (105) to accelerate until it reaches a desired launch speed;
a release mechanism configured to release the projectile (105) from the tether once the projectile (105) reaches the desired launch speed;
an exit port to allow the projectile (105) to exit from the chamber upon release from the tether; and
a counterweight mass (135) coupled to the second end portion of the tether (130), wherein the counterweight mass (135) is released from the tether at the same time as the projectile (105).

2. The system of claim 1
wherein the counterweight mass (135) is liquid-based.

3. The system of any of claims 1 or 2, wherein the chamber is of a circular shape and/or the chamber has an inverted roof.

4. The system of any of the preceding claims, wherein the exit port is kept closed until the release mechanism releases the projectile (105) from the tether.

5. The system of any of the preceding claims, wherein the tether is tapered in geometry such that the first end portion and second end portion are of less mass than the central portion.

6. The system of any of the preceding claims, wherein the projectile (105) comprises an onboard rocket to provide additional required velocity for the projectile (105) to enter a space orbit.

7. The system of any of the preceding claims, wherein the chamber comprises an inverted dome-shaped roof structure comprising a plurality of roof panels under tension; wherein the first end portion of the tether is coupled to the projectile (105) in proximity to an edge of the chamber and the second end portion is coupled to the motor at a center of the chamber.

8. The system of any of the preceding claims, wherein the vacuum pressure within the chamber is less than about 13.33 Pa (10⁻¹ torr).

9. The system of any of the preceding claims, wherein the vacuum pressure is selected to reduce aerodynamic drag and aerodynamic heating of the tether.

10. The system of any of the preceding claims, wherein the exit port comprises a membrane that is pierced by the projectile (105) as the projectile (105) exits the chamber or the exit port comprises a high-speed shutter that opens to allow the projectile (105) to pass through the exit port.

11. The system of any of the preceding claims, wherein the projectile (105) is a space vehicle.

12. A method (900) for launching a projectile (105), the method comprising:
coupling (905) a projectile (105) to a tether within a vacuum;
removing at least a portion of air within a chamber to create a vacuum condition within the chamber;
rotating (910) the tether and the coupled projectile (105) in a circular motion until a speed of the projectile (105) reaches a desired launch speed;
releasing (915) the projectile (105) from the tether; and
launching (920) the projectile (105) from the chamber out an exit port;
the method **characterised in that** it comprises the step of
simultaneously releasing a counterweight (135) attached to the tether when the projectile (105) is released from the tether.

13. The method of claim 12, wherein removing at least a portion of the air within the chamber comprises removing at least a portion of the air within the chamber such that a pressure within the chamber is about 1.33 Pa (10⁻² torr) or less.

14. The method of claim 12 or 13, wherein rotating the tether and the coupled projectile (105) in a circular motion comprises rotating the tether and the coupled projectile (105) in a circular motion until centrifugal forces on the projectile (105) reach 10,000 - 20,000 g.

## Patentansprüche

1. Beschleunigungssystem zum Starten eines Projektils (105), wobei das System Folgendes umfasst:
eine Kammer unter Vakuumdruck;
eine Haltevorrichtung mit einem ersten Endteil (125), einem Mittelteil und einem zweiten Endteil (130), wobei der erste Endteil mit einem Projektil (105) verbunden ist;
einen Motor, der eine Nabe (120), die an der Haltevorrichtung befestigt ist, in einer kreisförmigen Bewegung innerhalb der Kammer dreht, wobei die Drehung bewirkt, dass das Projektil (105) beschleunigt wird, bis es eine gewünschte Startgeschwindigkeit erreicht;
einen Freisetzungsmechanismus, der so konfiguriert ist, dass er das Projektil (105) von der Haltevorrichtung freisetzt, sobald das Projektil (105) die gewünschte Startgeschwindigkeit erreicht;
eine Austrittsöffnung, die es dem Projektil (105) ermöglicht, aus der Kammer auszutreten, wenn es von der Haltevorrichtung freigesetzt wird; und
eine Gegengewichtsmasse (135), die mit dem zweiten Endabschnitt der Haltevorrichtung (130) gekoppelt ist, wobei die Gegengewichtsmasse (135) zur gleichen Zeit wie das Projektil (105) von der Haltevorrichtung freigesetzt wird.

2. Das System nach Anspruch 1, wobei die Gegengewichtsmasse (135) flüssigkeitsbasiert ist.

3. System nach einem der Ansprüche 1 oder 2, wobei die Kammer eine kreisrunde Form und/oder die Kammer ein invertiertes Dach aufweist.

4. System nach einem der vorhergehenden Ansprüche, wobei die Austrittsöffnung geschlossen gehalten wird, bis der Freisetzungsmechanismus das Projektil (105) von der Haltevorrichtung freigibt.

5. System nach einem der vorhergehenden Ansprüche, wobei die Haltevorrichtung eine verjüngte Geometrie aufweist, sodass das erste Endteil und das zweite Endteil eine geringere Masse aufweisen als der Mittelteil.

6. System nach einem der vorhergehenden Ansprüche, wobei das Projektil (105) eine bordeigene Rakete umfasst, um zusätzliche erforderliche Geschwindigkeit für das Projektil (105) bereitzustellen, damit es in eine Weltraumumlaufbahn eintreten kann.

7. System nach einem der vorhergehenden Ansprüche, wobei die Kammer eine invertierte kuppelförmige Dachstruktur umfassend eine Vielzahl von Dachpaneelen unter Spannung umfasst; wobei das erste Endteil der Haltevorrichtung mit dem Projektil (105) in der Nähe eines Randes der Kammer gekoppelt ist und das zweite Endteil mit dem Motor in der Mitte der Kammer gekoppelt ist.

8. System nach einem der vorhergehenden Ansprüche, wobei der Vakuumdruck in der Kammer weniger als etwa 13,33 Pa (10⁻¹ torr) beträgt.

9. System nach einem der vorhergehenden Ansprüche, wobei der Vakuumdruck so gewählt ist, dass der aerodynamische Widerstand und die aerodynamische Erwärmung der Haltevorrichtung verringert werden.

10. Das System nach einem der vorhergehenden Ansprüche, wobei die Austrittsöffnung eine Membran umfasst, die von dem Projektil (105) durchstoßen wird, wenn das Projektil (105) die Kammer verlässt, oder die Austrittsöffnung einen Hochgeschwindigkeitsverschluss umfasst, der sich öffnet, damit das Projektil (105) die Austrittsöffnung passieren kann.

11. System nach einem der vorhergehenden Ansprüche, wobei das Projektil (105) ein Raumfahrzeug ist.

12. Verfahren (900) zum Starten eines Projektils (105), wobei das Verfahren umfasst:
Koppeln (905) eines Projektils (105) an eine Haltevorrichtung innerhalb eines Vakuums;
Entfernen von mindestens einem Teil der Luft in einer Kammer, um einen Vakuumzustand in der Kammer zu erzeugen;
Drehen (910) der Haltevorrichtung und des gekoppelten Projektils (105) in einer kreisförmigen Bewegung, bis eine Geschwindigkeit des Projektils (105) eine gewünschte Startgeschwindigkeit erreicht;
Freigeben (915) des Projektils (105) von der Haltevorrichtung; und
Starten (920) des Projektils (105) aus der Kammer durch eine Austrittsöffnung;
das Verfahren **dadurch gekennzeichnet, dass** es den Schritt der gleichzeitigen Freigabe eines an der Haltevorrichtung befestigten Gegengewichts umfasst, wenn das Geschoss (105) von der Haltevorrichtung freigegeben wird.

13. Verfahren nach Anspruch 12, wobei das Entfernen mindestens eines Teils der Luft in der Kammer das Entfernen mindestens eines Teils der Luft in der Kammer umfasst, sodass der Druck in der Kammer ungefähr 1,33 Pa (10⁻² Torr) oder weniger beträgt.

14. Verfahren nach Anspruch 12 oder 13, wobei das Drehen der Haltevorrichtung und des gekoppelten Projektils (105) in einer kreisförmigen Bewegung das Drehen der Haltevorrichtung und des gekoppelten Projektils (105) in einer kreisförmigen Bewegung umfasst, bis die Zentrifugalkräfte auf das Projektil (105) 10.000 - 20.000 g erreichen.

## Revendications

1. Système d'accélération permettant de lancer un projectile (105), le système comprenant une chambre à la pression de vide ;
une attache présentant une première partie d'extrémité (125), une partie centrale et une seconde partie d'extrémité (130), la première partie d'extrémité étant reliée à un projectile (105) ;
un moteur qui fait tourner un moyeu (120) fixé à l'attache dans un mouvement circulaire à l'intérieur de la chambre, la rotation amenant le projectile (105) à accélérer jusqu'à ce qu'il atteigne la vitesse de lancement souhaitée ;
un mécanisme de libération configuré afin de libérer le projectile (105) de l'attache une fois que le projectile (105) atteint la vitesse de lancement souhaitée ;
un orifice de sortie afin de permettre au projectile (105) de sortir de la chambre lors de la libération de l'attache ; et
une masse de contrepoids (135) couplée à la seconde partie d'extrémité de l'attache (130), dans lequel la masse de contrepoids (135) est libérée de l'attache en même temps que le projectile (105).

2. Système selon la revendication 1,
dans lequel la masse de contrepoids (135) est à base de liquide.

3. Système selon l'une quelconque des revendications 1 ou 2, dans lequel la chambre est de forme circulaire et/ou la chambre présente un toit inversé.

4. Système selon l'une quelconque des revendications précédentes, dans lequel l'orifice de sortie est maintenu fermé jusqu'à ce que le mécanisme de libération libère le projectile (105) de l'attache.

5. Système selon l'une quelconque des revendications précédentes, dans lequel l'attache est de forme géométrique conique de sorte que la première partie d'extrémité et la seconde partie d'extrémité sont de masse inférieure à la partie centrale.

6. Système selon l'une quelconque des revendications précédentes, dans lequel le projectile (105) comprend une fusée à bord permettant de fournir une vitesse requise supplémentaire pour que le projectile (105) entre dans une orbite spatiale.

7. Système selon l'une quelconque des revendications précédentes, dans lequel la chambre comprend une structure de toit en forme de dôme inversé comprenant une pluralité de panneaux de toit sous tension ; dans lequel la première partie d'extrémité de l'attache est couplée au projectile (105) à proximité d'un bord de la chambre et la seconde partie d'extrémité est couplée au moteur au centre de la chambre.

8. Système selon l'une quelconque des revendications précédentes, dans lequel la pression de vide dans la chambre est inférieure à environ 13,33 Pa (10^{- 1} torr).

9. Système selon l'une quelconque des revendications précédentes, dans lequel la pression de vide est sélectionnée afin de réduire une traînée aérodynamique et un chauffage aérodynamique de l'attache.

10. Système selon l'une quelconque des revendications précédentes, dans lequel l'orifice de sortie comprend une membrane qui est percée par le projectile (105) lorsque le projectile (105) sort de la chambre ou l'orifice de sortie comprend un obturateur à grande vitesse qui s'ouvre afin de permettre au projectile (105) de passer à travers l'orifice de sortie.

11. Système selon l'une quelconque des revendications précédentes, dans lequel le projectile (105) est un véhicule spatial.

12. Procédé (900) permettant de lancer un projectile (105), le procédé comprenant :
le couplage (905) d'un projectile (105) à une attache dans un vide ;
l'enlèvement d'au moins une partie de l'air dans une chambre afin de créer une condition de vide dans la chambre ;
la rotation (910) de l'attache et du projectile couplé (105) en un mouvement circulaire jusqu'à ce qu'une vitesse du projectile (105) atteigne une vitesse de lancement souhaitée ;
la libération (915) du projectile (105) de l'attache ; et
le lancement (920) du projectile (105) de la chambre à la sortie d'un orifice de sortie ;
le procédé étant **caractérisé en ce qu'**il comprend l'étape consistant à libérer simultanément un contre-poids (135) fixé à l'attache lorsque le projectile (105) est libéré de l'attache.

13. Procédé selon la revendication 12, dans lequel l'enlèvement d'au moins une partie de l'air dans la chambre comprend l'enlèvement d'au moins une partie de l'air dans la chambre de sorte qu'une pression dans la chambre soit d'environ 1,33 Pa (10⁻² torr) ou moins.

14. Procédé selon la revendication 12 ou 13, dans lequel la rotation de l'attache et du projectile couplé (105) dans un mouvement circulaire comprend la rotation de l'attache et du projectile couplé (105) dans un mouvement circulaire jusqu'à ce que des forces centrifuges sur le projectile (105) atteignent 10 000 - 20 000 g.
